(19) Europäisches Patentamt
European Patent Office
Office européen des brevets

(11) Publication number: **0 279 085 B1**

(12) # EUROPEAN PATENT SPECIFICATION

(45) Date of publication of patent specification: **30.09.92** (51) Int. Cl.[5]: **B01D 53/14**

(21) Application number: **87202606.7**

(22) Date of filing: **21.12.87**

(54) **H2S removal from gas streams.**

(30) Priority: **30.12.86 US 947731**
**30.12.86 US 947730**

(43) Date of publication of application:
**24.08.88 Bulletin 88/34**

(45) Publication of the grant of the patent:
**30.09.92 Bulletin 92/40**

(84) Designated Contracting States:
**BE DE ES FR GB IT NL SE**

(56) References cited:
**US-A- 4 009 251**
**US-A- 4 401 642**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **Lam-Ho Fong, Howard**
**1707 Creekside Drive**
**Sugar Land Texas 77478(US)**
Inventor: **van Kleeck, David Allen**
**9002 Sharpview**
**Houston Texas 77036(US)**
Inventor: **Harryman, John Michael**
**1202 Hannington Drive**
**Katy Texas 77450(US)**

EP 0 279 085 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The presence of significant quantities of $H_2S$ in various "sour" industrial gaseous streams poses a persistent problem. Although various procedures have been developed to remove and recover this contaminant, most such processes are deficient, for a variety of reasons.

In one cyclic method currently attracting attention, the sour gas is contacted with an aqueous polyvalent metal chelate or complex reactant solution to produce solid sulphur which is recovered either prior to or subsequent to regeneration of the reactant. Preferred reactants are Fe(III) complexes in which the Fe(III) forms complexes with specified organic acids and derivatives thereof.

While sour gaseous streams that contain relatively low concentrations of $H_2S$ may be treated sucessfully in a variety of ways if deep removal, e.g., greater than 95 percent removal of $H_2S$, is not required, removal of this level, or greater, demands efficiencies of operation if excessive costs of operation and materials are not to be incurred.

One scheme for carrying out the gas treatment utilizes a two-stage contacting procedure in which a venturi-shaped contacting zone is utilized as an initial or primary contacting stage to remove the bulk of the $H_2S$, and a follow-up or "clean-up" stage, such as a packed column or sparged tower, is provided for removing the remainder of the $H_2S$ in the gaseous stream.

These configurations have a number of drawbacks, such as susceptibility to plugging, high gas pressure drop, and high cost. It has been determined that the $H_2S$ removal rate by at least some iron chelate or complex systems is not limited by the reaction rate of the iron with the $H_2S$, but by the rate of absorption of the $H_2S$ into the reactant solution.

The present invention provides a process with an efficient contacting technique to insure good absorption rates of the $H_2S$ into the solution, while avoiding or minimizing plugging and high pressure drop might have great utility.

To this end the process for the removal of $H_2S$ from a sour gaseous stream according to the present invention comprises

a) feeding the sour gaseous stream to a first contacting zone, and intimately contacting the sour gaseous stream in said first contacting zone with an aqueous reactant solution containing solubilized Fe(III) chelate of an organic acid, or mixture of said acids, and solubilized Fe(II) chelate of the acid or acids, at a temperature below the melting point of sulphur, and at a sufficient solution to gas ratio and conditions effective to convert $H_2S$ to sulphur and inhibit sulphur deposition, and producing a gas-solution mixture comprising sour gas and aqueous reactant solution;

b) passing gas-solution mixture from step a) through a plurality of enclosed contacting sections in serial flow communication in a second contacting zone, under conditions to convert $H_2S$ to sulphur and at a temperature below the melting point of sulphur, the first contacting section of said second contacting zone comprising a plurality of discrete sulphur deposition resistant channels, each discrete channel providing a diverted flow path for gas-solution mixture through the section, such that gas-solution mixture is directed at least initially at an angle acute to that of the direction of flow of the gas-solution mixture entering the section; the second contacting section through which gas-solution mixture is passed comprising an enclosed mixing section operative to or adapted to allow radial mixing of gas-solution mixture and redistribution of solution in gas, and to inhibit plugging due to sulphur formation; the third contacting section through which gas solution mixture is passed comprising a plurality of discrete sulphur deposition resistant channels, each discrete channel providing a diverted flow path for gas-solution mixture through the section, such that gas-solution mixture is directed at least initially at an angle acute to that of the direction of flow of the gas-solution mixture entering the section; and producing a gas-reactant solution mixture containing solid sulphur in said second contacting zone, the reactant solution of said gas-reactant solution mixture having a reduced content of solubilized Fe(III) chelate of said acid or acids and the gas of said mixture having a reduced $H_2S$ content; and

c) separating the gas having reduced $H_2S$ content from gas-reactant solution mixture produced in step b).

The gas having reduced $H_2S$ content may be separated from the solution in the second contacting zone, but is preferably separated in a separate vessel or step.

If further purification is necessary or desired, the contacting procedure of steps a) and b) may be repeated, or other contacting techniques or schemes, such as use of a sparged tower or towers, may be used. In such cases, appropriate measures will be taken for separation of the further purified gas and regeneration of the aqueous reactant solution(s) employed. For example, the solution produced by step c) and additional solution from further purification or contacting steps may be combined and regenerated in a single regeneration step, sulphur removal being accomplished prior to or after the regeneration. Preferably, however, the gas having reduced $H_2S$ content from step b) will

simply be separated from the reactant solution, and a spent reactant solution containing sulphur will be recovered. In this case sulphur will be removed from the spent reactant solution containing sulphur, and the spent reactant solution from which sulphur has been removed will be regenerated, producing a reactant solution having an increased concentration of Fe(III) chelate of said acid or acids. The regenerated solution will then be passed to the first contacting zone for use as aqueous reactant solution therein.

In another embodiment, which may be preferred in some situations, the sulphur is separated after regeneration. That is, the spent reactant solution containing sulphur is regenerated, producing a regenerated reactant solution containing sulphur, sulphur is then removed from the regenerated solution, and the regenerated reactant solution from which sulphur has been removed is passed to the first contacting zone for use as the aqueous reactant solution therein.

Sulphur may also be removed during regeneration, although this is not preferred.

As used herein, the term "direction of flow", merely refers to the direction the bulk of the gas-solution mixture is proceeding at the respective entrances of the sections at any given time, it being recognized that a minor portion or portions of the mixture may have, at least temporarily, directional movements different from the movement of the bulk or mass of the gas-solution mixture. The acute flow path angles of the channels of a contacting section may vary considerably, but preferably the angles to the direction of flow will range from about 5° to about 60°, most preferably from about 15° to about 45°. Angles approaching 90° are less desirable, since such angles will increase the possibility of sulphur deposition and plugging. A limited amount of "abrupt" change of the flow of the gas-solution mixture may thus be tolerated in the invention, provided the radial mixing and redistribution section or sections of the invention are employed, as described more fully hereinafter. The channels may be oriented in different directions with respect to each other, while maintaining acute angles to the direction of flow. If a channel has a wide acute angle, or if the channel is positioned near the wall or walls of the second contacting zone, the flow of the gas-solution mixture may be directed to and contact the wall or walls of the second contacting zone, and secondary channels, at an obtuse angle to the direction of flow, communicating with these channels, may provide flow of the gas-solution mixture into the radial mixing sections. Preferably, the ratio of the length of the first contacting section to the length of the second contacting zone (length referring to the distance through the zone or section in the direction of flow) is no greater than about 0.5, preferably no greater than about 0.3.

As used herein, the term "sulphur deposition resistant" refers to the quality or character of the walls of the discrete channels in being free or at least substantially free of sites where sulphur, present or produced in the gas-solution mixture, may deposit. Such a surface may be produced by polishing, such as by electropolishing, or it may be formed by coating the surface with a suitable material, such as teflon type materials.

The redistribution section or sections accomplish the important function of redistributing the solution in the gas and inhibiting sulphur deposition. As used herein, the term "operative or adapted to allow radial mixing of gas-solution mixture and redistribution of solution in gas, and to inhibit plugging due to sulphur formation" refers to the requirements that the enclosed redistribution sections (1) do not contain structure, or have limited structure, which would inhibit or prevent radial mixing of gas and solution, and distribution or redistribution of the solution in the gas; (2) will be of sufficient width, and length in the direction of flow, to allow the radial mixing desired and eliminate plugging due to sulphur formation. Given these requirements, and the disclosure herein, those skilled in the art may determine by experimentation the minimum effective width and length of the redistribution section or sections (length referring to the distance through the sections in the direction of flow) and the appropriate ratio of the length of the respective channeled sections to the redistribution sections. In practice, the ratio will preferably range from about 0.1 to about 10, most preferably from about 0.3 to about 4. Normally, the ratio of the length of a given contacting section to the widest dimension of the section will range from about 0.2 to about 5, preferably about 0.3 to about 2. The dimensions of the first contacting zone are not critical, other than that it must be of a size where good distribution of the reactant solution in the gaseous stream is achieved. In this regard, the first contacting zone is an important part of the invention, since good initial intimate mixing of the gas stream and the reactant solution is important for efficiency.

As specified, at least two contacting sections are required in the second contacting zone, but beyond this, the number of additional contacting sections in the second contacting zone is not critical. The number of sections will be determined primarily by the amount of $H_2S$ to be removed and the desired degree of gaseous stream purity. Normally, from 2 to 20 or 30 contacting, channeled sections will suffice, with from 1 to 20 or 30 redistribution sections being sufficient. It is a requirement of the invention that the contacting sections

and the radial mixing sections alternate in the sequence of flow, so that sulphur deposition and plugging are eliminated or reduced. The shape of the enclosing walls of the contacting sections is not critical, but a generally cylindrical shape is preferred. The invention is admirably suited for use in the type of structure commonly referred to as a pipeline contactor, and the redistribution sections may simply be open spaces between the sections containing the structured, channeled internals.

It is a preferred aspect of the invention that, by suitable flow rates and design of the channeled sections, the flow of the gas- solution mixture through the second contacting zone will reach or approximate plug flow. Suitable structures for providing the channeled flow include, but are not limited to, chevron-type mixers, such as Koch static mixers or Glitsch Gempak mixers. The velocity of the gas treated may vary widely. Suitable gas velocities may range from about 0,3 m/s to about 15 m/s, with a range of from about 1,5 m/s to about 9 m/s being preferred. As noted, the aqueous reactant solution to gas ratio must be sufficient to provide effective removal of $H_2S$ while inhibiting or preventing sulphur deposition in the reaction zones. Preferably, the solution to gas ratio will range from 0.2:100 to 30:100, most preferably from 0.5:100 to 5:100, all by volume. Such ratios will generally be sufficient to provide good wetting of the channel surfaces so that sulphur deposition is inhibited or prevented.

The iron chelates employed are coordination complexes in which irons forms chelates with an acid. The acid may have the formula

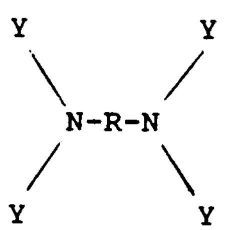

wherein

- from two to four of the groups Y are selected from acetic and propionic acid groups;
- from zero to two of the groups Y are selected from 2-hydroxyethyl, 2-hydroxypropyl, and

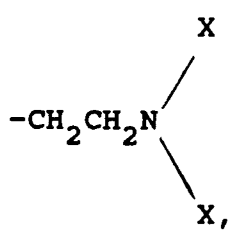

wherein X is selected from acetic and propionic acid groups; and

R is ethylene, propylene or isopropylene or alternatively cyclohexane or benzene where the two hydrogen atoms replaced by nitrogen are in the 1,2 position, and mixtures thereof.

Exemplary chelating agents for the iron include aminoacetic acids derived from ethylenediamine, diethylenetriamine, 1,2-propylenediamine, and 1,3-propylenediamine, such as EDTA (ethylenediamine tetraacetic acid), HEEDTA (N-2-hydroxyethyl ethylenediamine triacetic acid), DETPA (diethylenetriamine pentaacetic acid); amino acetic acid derivatives of cyclic, 1,2-diamines, such as 1,2-diamino cyclohexane-N,N-tetraacetic acid, and 1,2-phenylene-diamine-N,N- tetraacetic acid, and the amides of polyamino acetic acids disclosed in Bersworth US-A-3,580,950. Suitably, the ferric chelate of N-(2- hydroxyethyl) ethylenediamine triacetic acid (HEEDTA) is used.

A further suitable iron chelate is the coordination complex in which iron forms a chelate with nitrilotriacetic acid (NTA).

The iron chelates are supplied in solution as solubilized species, such as the ammonium or alkali metal salts (or mixtures thereof) of the iron chelates. As used herein, the term "solubilized" refers to the dissolved iron chelate or chelates, whether as a salt or salts of the aforementioned cation or cations, or in some other form, in which the iron chelate or chelates exist in solution. Where solubility of the chelate is difficult, and higher concentrations of chelates are desired, the ammonium salt may be utilized, as described in EP-A 215,505.

However, the invention may also be employed with more dilute solutions of the iron chelates, wherein the steps taken to prevent iron chelate precipitation are not critical.

The regeneration of the reactant is preferably accomplished by the utilization of oxygen, preferably as air. As used herein, the term "oxygen" is not limited to "pure" oxygen, but includes air, air enriched with oxygen, or other oxygen-containing gases. The oxygen will accomplish two functions, the oxidation of Fe(II) iron of the reactant to the Fe(III) state, and the stripping of any residual dissolved gas (if originally present) from the aqueous admixture. The oxygen (in whatever form supplied) is supplied in a stoichiometric equivalent or excess with respect to the amount of solubilized iron chelate to be oxidized to the Fe(III) state. Preferably, the oxygen is supplied in an amount of from about 20 percent to about 500 percent excess. Electrochemical regeneration may also be employed.

The particular type of sour gaseous stream treated is not critical, the only practical limitation being the reactivity of the stream itself with the

solutions employed, as will be evident to those skilled in the art. Streams particularly suited to removal of $H_2S$ by the practice of the invention are, as indicated, naturally-occurring gases, recycled $CO_2$ used in enhanced oil recovery, synthesis gases, process gases, and fuel gases produced by gasification procedures, e.g., gases produced by the gasification of coal, petroleum, shale, tar sands, etc. Particularly preferred are coal gasification streams, natural gas streams, produced and recycled $CO_2$ streams, and refinery feedstocks composed of gaseous hydrocarbon streams, especially those streams of this type having a low ratio of $H_2S$ to $CO_2$, and other gaseous hydrocarbon streams. The term "hydrocarbon stream(s)", as employed herein, is intended to include streams containing significant quantities of hydrocarbon (both paraffinic and aromatic), it being recognized that such streams contain significant "impurities" not technically defined as a hydrocarbon. Again, streams containing principally a single hydrocarbon, e.g., ethane, are eminently suited to the practice of the invention. Streams derived from the gasification and/or partial oxidation of gaseous or liquid hydrocarbon may be treated by the invention. The $H_2S$ content of the type of streams contemplated will vary extensively, but, in general, will range from about 0.005 percent to about 10 percent by volume. $CO_2$ may or may not be present, but if present, may range in content from about 0.1 percent to about 99.0 percent (or more) by volume. In this context, the invention may be used to remove $H_2S$ from various $CO_2$ streams, e.g., supercritical $CO_2$ streams. Obviously, the amounts of $H_2S$ and $CO_2$ present are not generally a limiting factor in the practice of the invention. The stream treated may also have been treated initially for $H_2S$ removal, by this or some other technique.

The temperatures employed in the contacting zones are not generally critical, except that the reaction is carried out below the melting point of sulphur. In many commercial applications, such as removal of $H_2S$ from natural gas to meet pipeline specifications, absorption at ambient temperatures is desired. In general, temperatures of from 10 °C to 80 °C are suitable, and temperatures of from 20 °C to 60 °C are preferred. Total contact times may be varied widely, but will preferably range from about 0.5 second to about 10 seconds, with total contact times of about 1 second to about 5 seconds being most preferred.

Similarly, in the regeneration or stripping zone or zones, temperatures may be varied widely. Preferably, the regeneration zone should be maintained at somewhat lower temperatures compared to the contacting zone. In general, temperatures of from about 10 °C to 80 °C, preferably 20 °C to 50 °C, may be employed.

Pressure conditions in the contacting zones may vary widely, depending on the pressure of the gas to be treated. For example, pressures in the contacting zones may vary from 0.1 MPa up to 15 MPa or even 20 MPa. Pressures of from 0.1 MPa to about 10 MPa are preferred. In the regeneration zone, pressures may be varied considerably, and will preferably range from about 0.1 MPa to about 0.3 or 0.4 MPa. Residence times for given volumes of admixture and oxygen will also vary, but preferably will range from about 1 minute to about 60 minutes, most preferably from about 1 minute to about 40 minutes. The pressure, fluid flow, and temperature relationships involved are well understood by those skilled in the art, and need not be detailed herein. Other conditions of operation for this type of reaction process are further described in U.S. Patent No. 3,068,065, and in the aforementioned published patent application. Suitably, the pH in the regeneration zone will range from about 6.5 to about 8.5, and the molar ratio of the acid or acids to total solubilized iron is from about 1.0 to 1.5. The process is preferably conducted continuously.

As indicated, the $H_2S$, when contacted, is rapidly converted in the process of the invention by the solubilized Fe(III) chelate of the above-mentioned acid or acids to solid elemental sulphur. Since the iron chelates per se have limited solubility in water, the iron chelate compound or compounds are preferably supplied, as indicated previously. The amount of solubilized Fe(III) chelate supplied or employed in solution is an amount sufficient to reduce the $H_2S$ concentration or content of the stream to the desired level. If total or substantially total removal is desired, the total amount supplied will generally be on the order of at least about two mols per mol of $H_2S$. Ratios of from about 2 mols to about 15 mols of solubilized Fe(III) chelate of specified acid or acids per mol of $H_2S$ may be used, with ratios of from about 2 mols per mol to about 5 mols of solubilized Fe(III) chelate per mol of $H_2S$ being preferred. The molar ratio of the Fe(III) chelate of the acid or acids present to the Fe(II) chelate of said acid or acids in the contacting solution will normally be less than about 6, and will preferably range from about 0.2 to about 6, most preferably about 0.5 to about 6. The chelate solution will generally be supplied as an aqueous solution having a concentration of from about 0.1 molar to about 3 molar; a concentration of from about 0.5 to about 1.5 molar is preferred. The total iron concentration, as the chelates, will range from about 0.01 percent, preferably about 0.5 percent, to about 7 percent by weight, based on the weight of the solution and the iron. As indicated, the solubilized iron chelates may be formed in aqueous solution by the reaction of elemental iron or of an appropriate salt, oxide, or hydroxide of iron and specified acid, in the presence of alkali metal or ammonium ions, or with the ammonium or alkali metal salt.

The invention will now be described by way of example in more detail with reference to the accompanying schematic drawing. The drawing illustrates an embodiment of the invention wherein the sour gas contacting zones are vertically disposed and sulphur removal is accomplished in a separate step before regeneration. All values are calculated or merely exemplary, and all flows, unless stated otherwise, are continuous.

As shown, sour gas, e.g., a natural gas stream containing about 0.5 percent $H_2S$, in line 1 flows into generally cylindrical column 2 wherein it is intimately contacted in zone 3 thereof with a spray of an aqueous mixture from line 4 which comprises aqueous 0.6 M solution of ammonium Fe(III) HEEDTA chelate, which mixture also contains 0.2 moles per liter of ammonium Fe(II) HEEDTA chelate and about 0.25 moles per liter of ammonium thiosulfate, pH of the solution being adjusted to 7.5 to 8 by the addition of ammonium hydroxide. The solution is produced by utilization of the reducing effect of the $H_2S$ in the gaseous stream. That is, the initial solution employed in the contacting zone illustrated is a 0.8 M aqueous solution of Fe(III) HEEDTA chelate also containing sufficient added ammonium hydroxide to maintain the pH of the solution at 6.5 to 8.5. After startup, and reaction with $H_2S$ in the gaseous stream, regeneration, described hereinafter, is controlled, so that regeneration of the ammonium Fe(III) HEEDTA chelate is not complete, in the ratios mentioned.

In zone 3, the gas stream containing $H_2S$ and the aqueous reactant mixture are intimately mixed to form a gas-reactant liquid mixture, sulphur almost immediately forming, and the gas-reactant liquid mixture is passed downwardly in cocurrent relationship to the first section 5 of contacting zone 6.

Although a spray column is illustrated, other suitable devices or techniques which provide intimate mixing or contacting of the gas and aqueous reactant mixture may be employed. For example, sparging units, cone sprayers, as well as venturis, may be utilized to produce a well mixed gas-solution or liquid mixture.

In any event, contacting section 5 comprises a chevron type flow directing element which provides a plurality of discrete channels for the passage and direction of the gas-reactant liquid mixture at a 30° angle to the direction of flow to the side of the cylindrical column. In this illustration, the element used is a Koch SMV. mixing element. To insure that the surfaces of the channels are resistant to sulphur deposition, the mixing element, and all those described hereinafter for zone 6, are electropolished before use. While these elements have commonly been previously proposed for use in series, misoriented with respect to each other, for turbulent flow, the object in the present case is to avoid abrupt change in direction of the flow by the provision of spacing between succeeding elements, so that at least substantial plug flow overall through zone 6 is obtained. The superficial velocity of the gas is 6 m/s, and the liquid to gas volumetric flow ratio is 2:100. The width of the channels of the element 5 is about 2.5 cm, and the diameter of the column is about 30.5 cm. The length of element 5 in the direction of flow is about 30.5 cm. As indicated, other types of elements may be employed. At the outlets of the channels of element 5, gas-reactant liquid mixture from the channels enters an open section 7 (also about 30.5 cm in length in the direction of flow) of contacting zone 6 where gas-liquid reactant mixture may mix radially and where redistribution of solution and gas occurs. The open section also inhibits plugging, due to sulphur formation, which might occur if multiple chevron elements were placed end to end. The gas-reactant liquid mixture, with increasing solid sulphur content, passes through chevron element 8, which is identical to element 5. Element 8 may or may not be misoriented with respect to element 5.

The gas-reactant liquid mixture, upon leaving the channels of element 8, passes through redistribution section 9, where the dimensions and operation are similar to that occurring in section 7. The flow of the gas-reactant liquid mixture through the remaining corresponding sections of zone 6 is similar to that described with respect to the first four sections, and need not be described, except to note that the $H_2S$ in the gas stream is continually being reduced, with concomitant sulphur formation and reduction of the Fe(III) chelate concentration.

At the lower end of column 2, the gas-reactant liquid mixture, now containing solid sulphur, passes from column 2, and is sent via line 10 to a separating unit or vessel 11 where the natural gas is separated from the liquid mixture. Purified natural gas is removed overhead via line 12, and "spent" reactant liquid and sulphur are removed via line 13.

As those skilled in the art will recognize, solution concentrations, sulphur content, and Fe(III)-Fe(II) ligand concentrations and ratios must be regulated to achieve appropriate $H_2S$ removal. To maintain appropriate Fe(III) concentrations and provide sulphur removal, stream 13 is sent for regeneration and sulphur removal.

More particularly, the aqueous admixture in line 13 is sent to a depressurization and degassing unit 14, which also serves as a sulphur concentration or thickening zone. A minor portion, e.g., 2 to 5 percent by volume of the admixture in settler or thickener 14, and containing an increased sulphur concentration, is continuously withdrawn from the lower portion of settler or concentrator 14 and sent via line 15 to sulphur recovery in unit 16.

Sulphur recovery may be accomplished in any suitable fashion, such as by filtration. For example, sulphur may also be recovered by that method described in European patent application publication No. 212,730. As those skilled in the art will recognize, sulphur may be removed after regeneration, if desired. In any event, solution recovered during sulphur recovery may be returned to any suitable point in the process, if proper adjustment is made. Preferably, however, the solution recovered is sent to the regeneration zone, as shown, via lines 17 and 18.

The major portion of the aqueous admixture in vessel 14 is removed via line 18 for regeneration of the Fe(III) chelate of HEEDTA. In regeneration zone or column 19, which may be a sparged tower, the admixture is contacted cocurrently with excess air in line 20 to convert Fe(II) chelate of HEEDTA to Fe(III) chelate of HEEDTA. Air velocity in the regenerator is in the range of 0.03 to 0.09 m/s, the temperature of the liquid is about 45°C, and overall pressure is about 0.2 MPa. Spent air is removed via line 21, and regenerated admixture, having a ratio of Fe(III) chelate of HEEDTA to Fe(II) chelate of HEEDTA of about 3, is returned via line 22 to line 4, which connects, as mentioned, to column 2.

In a further embodiment of the invention a natural gas stream containing about 0.5 percent $H_2S$, in line 1 flows into the column 2 wherein it is intimately contacted in zone 3 thereof with a spray of an aqueous mixture from line 4 which comprises aqueous 0.6 M solution of ammonium Fe(III) NTA chelate, which mixture also contains 0.5 moles per liter of ammonium Fe(II) NTA chelate and about 0.25 moles per liter of ammonium thiosulfate, pH of the solution being adjusted to 7.5 to 8 by the addition of ammonium hydroxide. The solution is produced by utilization of the reducing effect of the $H_2S$ in the gaseous stream. That is, the initial solution employed in the contacting zone illustrated is a 0.8 M aqueous solution of Fe(III) NTA chelate also containing about 2.5 moles ammonium ion per litre. After startup, and reaction with $H_2S$ in the gaseous stream, regeneration, described hereinafter, is controlled, so that regeneration of the ammonium Fe(III) NTA chelate is not complete, in the ratios mentioned.

In the column 2 the gas stream containing $H_2S$ and the aqueous reactant mixture are contacted as described above.

At the lower end of column 2, the gas-reactant liquid mixture, now containing solid sulphur, passes from column 2, and is sent via line 10 to a separating unit or vessel 11 where the natural gas is separated from the liquid mixture. Purified natural gas is removed overhead via line 12, and "spent" reactant liquid and sulphur are removed via line 13.

The aqueous admixture in line 13 is sent to a depressurization and degassing unit 14, which also serves as a sulphur concentration or thickening zone. A minor portion, e.g., 2 to 5 percent by volume of the admixture in settler or thickener 14, and containing an increased sulphur concentration, is continuously withdrawn from the lower portion of settler or concentrator 14 and sent via line 15 to sulphur recovery in unit 16.

The solution recovered from the unit 16 is sent to the regeneration zone, as shown, via lines 17 and 18.

The major portion of the aqueous admixture in vessel 14 is removed via line 18 for regeneration of the Fe(III) chelate of NTA. In regeneration zone or column 19, which may be a sparged tower, the admixture is contacted cocurrently with excess air in line 20 to convert Fe(II) chelate of NTA to Fe(III) chelate of NTA. Air velocity in the regenerator is in the range of 0.03 to 0.09 m/s, the temperature of the liquid is about 45°C, and overall pressure is about 0.2 MPa. Spent air is removed via line 21, and regenerated admixture, having a ratio of Fe(III) chelate of NTA to Fe(II) chelate of NTA of about 3, is returned via line 22 to line 4, which connects, as mentioned, to column 2.

Again, as will be understood by those skilled in the art, the solutions or mixtures employed may contain other materials or additives for given purposes. For example, US-A-3,933,993 discloses the use of buffering agents, such as phosphate and carbonate buffers. Similarly, US-A 4,009,251 describes various additives, such as sodium oxalate, sodium formate, sodium thiosulfate, and sodium acetate, which are beneficial, and other additives, such as additives to improve sulfur separation, or antifoaming and/or wetting agents, may be employed.

## Claims

**1.** Process for the removal of $H_2S$ from a sour gaseous stream comprising

a) feeding the sour gaseous stream to a first contacting zone, and intimately contacting the sour gaseous stream in said first contacting zone with an aqueous reactant solution containing solubilized Fe(III) chelate of an organic acid, or mixture of said acids, and solubilized Fe(II) chelate of the acid or acids, at a temperature below the melting point of sulphur, and at a sufficient solution to gas ratio and conditions effective to convert $H_2S$ to sulphur and inhibit sulphur deposition, and producing a gas-solution mixture comprising sour gas and aqueous reactant solution;

b) passing gas-solution mixture from step a) through a plurality of enclosed contacting sections in serial flow communication in a second contacting zone, under conditions to convert $H_2S$ to sulphur and at a temperature below the melting point of sulphur, the first contacting section of said second contacting zone comprising a plurality of discrete sulphur deposition resistant channels, each discrete channel providing a diverted flow path for gas-solution mixture through the section, such that gas-solution mixture is directed at least initially at an angle acute to that of the direction of flow of the gas-solution mixture entering the section; the second contacting section through which gas-solution mixture is passed comprising an enclosed mixing section operative to or adapted to allow radial mixing of gas-solution mixture and redistribution of solution in gas, and to inhibit plugging due to sulphur formation; the third contacting section through which gas solution mixture is passed comprising a plurality of discrete sulphur deposition resistant channels, each discrete channel providing a diverted flow path for gas-solution mixture through the section, such that gas-solution mixture is directed at least initially at an angle acute to that of the direction of flow of the gas-solution mixture entering the section; and producing a gas-reactant solution mixture containing solid sulphur in said second contacting zone, the reactant solution of said gas-reactant solution mixture having a reduced content of solubilized Fe(III) chelate of said acid or acids and the gas of said mixture having a reduced $H_2S$ content; and

c) separating the gas having reduced $H_2S$ content from gas-reactant solution mixture produced in step b).

**2.** Process according to claim 1, wherein the gas having reduced $H_2S$ content from step c) is contacted with additional aqueous reactant solution containing solubilized Fe(III) chelate of said acid or acids, at a temperature below the melting point of sulphur and under conditions effective to convert $H_2S$ to sulphur, in at least one additional contacting zone, and a gas having further reduced $H_2S$ content and a solution having a reduced content of the solubilized Fe-(III) chelate of said acid or acids are produced.

**3.** Process according to claim 2, wherein at least one of said additional contacting zone or zones comprises a spraying zone wherein the gas having reduced $H_2S$ content is passed countercurrently through a spray of said additional reactant solution.

**4.** Process according to claim 3, wherein the solution having a reduced content of the ferric chelate of said acid or acids and the solution having a reduced content of said acid or acids from said additional contacting zone or zones are regenerated in a regeneration zone.

**5.** Process according to claim 1, further comprising

d) removing sulphur from the reactant solution from step c),

e) regenerating the reactant solution from which sulphur has been removed, producing a reactant solution having an increased concentration of Fe(III) chelate of the acid or acids; and

f) passing regenerated solution from step e) to the first contacting zone for use as aqueous reactant solution therein.

**6.** Process according to claim 1, further comprising

d) regenerating the reactant solution from step c), producing a regenerated solution having an increased concentration of Fe(III) chelate of the acid or acids;

e) removing sulphur from the regenerated solution from step d); and

f) passing regenerated solution from step e) to the first contacting zone for use as aqueous reactant solutions.

**7.** Process according to any one of the claims 1-6, wherein the iron chelates employed are coordination complexes in which iron forms chelates with an organic acid having the formula

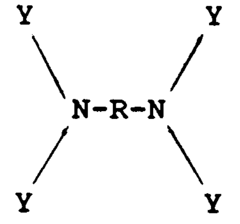

wherein

- from two to four of the groups Y are selected from acetic and propionic acid groups;
- from zero to two of the groups Y are

selected from 2-hydroxyethyl, 2-hydroxypropyl, and

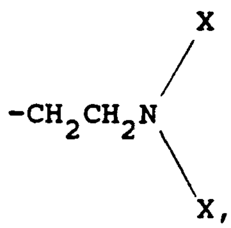

wherein X is selected from acetic and propionic acid groups; and
R is ethylene, propylene or isopropylene or alternatively cyclohexane or benzene where the two hydrogen atoms replaced by nitrogen are in the 1,2 position, and mixtures thereof.

**8.** Process according to claim 7, wherein the organic acid is N-(2-hydroxyethyl)-ethylenediamine triacetic acid.

**9.** Process according to any one of the claims 1-6, wherein the iron chelates employed are coordination complexes with nitrilotriacetic acid.

**Patentansprüche**

**1.** Verfahren zum Entfernen von $H_2S$ aus einem sauren Gasstrom, umfassend:
a) Einspeisen des sauren Gasstroms in eine erste Kontaktierzone, und sorgfältiges Kontaktieren des sauren Gasstroms in dieser ersten Kontaktierzone mit einer wäßrigen Lösung von Reaktanden, enthaltend löslich gemachtes Fe(III)-Chelat einer organischen Säure, oder einer Mischung solcher Säuren,und löslich gemachtes Fe(II)-Chelat der Säure bzw.Säuren,bei einer Temperatur unterhalb des Schmelzpunktes von Schwefel, bei einem ausreichenden Verhältnis von Lösung zu Gas und bei für die Umwandlung von $H_2S$ in Schwefel und das Verhindern des Absetzens von Schwefel geeigneten Bedingungen, und Herstellen einer Gas-Lösungs-Mischung, umfassend saures Gas und wäßrige Lösung von Reaktanden;
b)Leiten der Gas-Lösungsmischung von Stufe a) durch mehrere umschlossene hintereinander angeordnete und in Strömungsverbindung stehende Kontaktierabschnitte in einer zweiten Kontaktierzone, unter für die Umwandlung von von $H_2S$ in Schwefel geeigneten Bedingungen und bei einer Temperatur unterhalb des Schmelzpunktes von Schwefel, wobei der erste Kontaktierabschnitt der genannten zweiten Kontaktierzone mehrere getrennte Kanäle aufweist, welche gegen die Ablagerung von Schwefel resistent sind, und wobei jeder einzelne Kanal einen umleitenden Strömungsweg für die Gas-Lösungs-Mischung durch den Abschnitt enthält, so daß sich die Gas-Lösungs-Mischung wenigstens anfänglich in einem zur Strömungsrichtung der in den Abschnitt eintretenden Gas-Lösungs-Mischung spitzen Winkel befindet; der zweite Kontaktierabschnitt, durch welchen die Gas-Lösungs-Mischung geleitet wird, einen umschlossenen Mischabschnitt umfaßt, welcher dafür angelegt oder geeignet ist, ein radiales Mischen der Gas-Lösungs-Mischung und Wiederverteilen von Lösung in Gas stattfinden zu lassen, und ein Verstopfen aufgrund von Schwefelbildung zu verhindern; der dritte Kontaktierabschnitt, durch welchen die Gas-Lösungs-Mischung geleitet wird, mehrere getrennte Kanäle aufweist, welche gegen die Ablagerung von Schwefel resistent sind, wobei jeder einzelne Kanal einen umleitenden Strömungsweg für die Gas-Lösungs-Mischung durch den Abschnitt vorsieht, so daß sich die Gas-Lösungs-Mischung wenigstens anfänglich in einem zur Strömungsrichtung der in den Abschnitt eintretenden Gas-Lösungs-Mischung spitzen Winkel befindet; und Herstellen einer Gas-Reaktandenlösungs-Mischung, enthaltend festen Schwefel in der genannten zweiten Kontaktierzone, wobei die Reaktandenlösung der genannten Gas-Reaktandenlösungs-Mischung einen verminderten Gehalt an löslich gemachtem Fe(III)-Chelat der genannten Säure oder Säuren aufweist, und das Gas der genannten Mischung einen verminderten Gehalt an $H_2S$ aufweist; und
c) Abtrennen des Gases mit vermindertem $H_2S$-Gehalt aus der in Stufe b) hergestellten Gas-Reaktandenlösungs-Mischung .

**2.** Verfahren nach Anspruch 1, in welchem das Gas mit vermindertem $H_2S$-Gehalt aus Stufe c) mit einer weiteren wäßrigen Reaktandenlösung, enthaltend löslich gemachtes Fe(III)-Chelat der genannten Säure bzw.Säuren, bei einer Temperatur unterhalb des Schmelzpunkts von Schwefel und unter für die Umwandlung von $H_2S$ in Schwefel geeigneten Bedingungen, in mindestens einer zusätzlichen Kontaktierzone kontaktiert wird, und ein Gas mit weiter vermindertem $H_2S$-Gehalt und eine Lösung mit vermindertem Gehalt an löslich gemachtem Fe-(III)-Chelat der genannten Säure bzw. Säuren hergestellt werden.

3. Verfahren nach Anspruch 2, in welchem mindestens eine der genannten zusätzlichen Kontaktierzone(n) eine Sprühzone umfaßt, in welcher das Gas mit vermindertem $H_2S$-Gehalt im Gegenstrom durch einen Sprühstrahl der genannten zusätzlichen Reaktandenlösung geleitet wird.

4. Verfahren nach Anspruch 3, in welchem die Lösung mit vermindertem Gehalt an Eisen(III)-Chelat der genannten Säure bzw. Säuren und die Lösung mit vermindertem Gehalt an der genannten Säure bzw. den genannten Säuren aus der genannten zusätzlichen Kontaktierzone bzw. Kontaktierzonen in einer Regenerierzone regeneriert werden.

5. Verfahren nach Anspruch 1, weiterhin umfassend
   d) Entfernen von Schwefel aus der Reaktandenlösung von Stufe c),
   e) Regenerieren der Reaktandenlösung, aus welcher Schwefel entfernt worden ist, Herstellen einer Reaktandenlösung mit erhöhter Konzentration an Fe(III)-Chelat der genannten Säure bzw. Säuren; und
   f) Leiten der regenerierten Lösung von Stufe e) zur ersten Kontaktierzone zur Verwendung als wäßrige Reaktandenlösung in dieser Zone.

6. Verfahren nach Anspruch 1, weiterhin umfassend
   d) Regenerieren der Reaktandenlösung von Stufe c), Herstellen einer regenerierten Lösung mit einer erhöhten Konzentration an Fe(III)-Chelat der genannten Säure bzw. Säuren;
   e) Entfernen von Schwefel aus der regenerierten Lösung aus Stufe d); und
   f) Leiten der regenerierten Lösung von Stufe e) zur ersten Kontaktierzone zur Verwendung als wäßrige Reaktandenlösung.

7. Verfahren nach einem der Ansprüche 1 bis 6, in welchem die verwendeten Eisen-Chelate Koordinationskomplexe sind, in welchen Eisen Chelate bildet mit einer organischen Säure der Formel

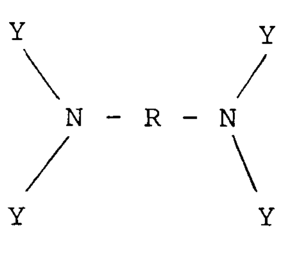

in welcher zwei bis vier der Gruppen Y ausgewählt sind aus Essigsäure- und Propionsäuregruppen;
null bis zwei der Gruppen Y ausgewählt sind aus 2-Hydroxyäthyl, 2-Hydroxypropyl, und

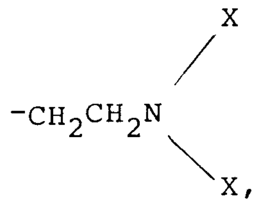

wobei X ausgewählt ist aus Essigsäure- und Propionsäuregruppen; und
R Äthylen, Propylen oder Isopropylen oder alternativ Cyclohexan oder Benzol, wobei die beiden durch Stickstoff ersetzten Wasserstoffatome sich in der 1,2-Stellung befinden, und Mischungen davon darstellt.

8. Verfahren nach Anspruch 7. in welchem die organische Säure N-(2-Hydroxyäthyl)-äthylendiamin-triessigsäure ist.

9. Verfahren nach einem der Ansprüche 1 bis 6, in welchem die eingesetzten Eisenchelate Koordinationskomplexe mit Nitrilotriessigsäure sind.

**Revendications**

1. Procédé pour enlever $H_2S$ d'un courant gazeux acide dans lequel
   a) on charge le courant gazeux acide dans une première zone de contact, et on met en contact intime le courant gazeux acide dans ladite première zone de contact avec une solution réactive aqueuse contenant un chélate de Fe(III) solubilisé d'un acide organique, ou un mélange desdits acides, et un chélate de Fe(II) solubilisé du ou des acide(s), à une température inférieure au point de fusion du soufre, et dans un rapport suffisant de la solution au gas et des conditions efficaces pour transformer l'$H_2S$ en soufre et inhiber le dépôt de soufre, et on produit un mélange gaz-solution comprenant le gaz acide et la solution réactive aqueuse;
   b) on fait passer le mélange gaz-solution de l'étape a) à travers plusieurs sections en contact incluses dans une communication d'écoulement en série dans une seconde zone de mise en contact, dans des conditions permettant de transformer l'$H_2S$ en soufre et à une température inférieure au

point de fusion du soufre, la première section de contact de ladite seconde zone de contact comprenant plusieurs canaux discrets résistant au dépôt de soufre, chaque canal discret fournissant une voie d'écoulement déviée pour le mélange gaz-solution à travers la section, de manière que le mélange gaz-solution soit dirigé au moins initialement à un angle aigu par rapport à celui de la direction d'écoulement du mélange gaz-solution pénétrant dans la section; la seconde section de contact à travers laquelle on fait passer le mélange gaz-solution comprenant une section de mélange incluse fonctionnant pour ou adaptée pour permettre un mélange radial de mélange gaz-solution et une redistribution de la solution dans le gaz, et pour inhiber l'obturation due à la formation de soufre; la troisième section de contact à travers laquelle on fait passer le mélange gaz-solution comprenant plusieurs canaux discrets résistant au dépôt de soufre, chaque canal discret fournissant une voie d'écoulement déviée pour le mélange gaz-solution à travers la section, de manière que le mélange gaz-solution soit dirigé au moins initialement à un angle aigu par rapport à celui de la direction d'écoulement du mélange gaz-solution pénétrant dans la section; et produisant un mélange gaz-solution réactive contenant du soufre solide dans ladite seconde zone de contact, la solution réactive dudit mélange gaz-solution réactive ayant une teneur réduite en chélate de Fe-(III) solubilisé du ou desdit(s) acide(s) et le gaz dudit mélange ayant une teneur réduite en $H_2S$; et

c) on sépare le gaz ayant une teneur réduite en $H_2S$ d'avec le mélange gaz-solution réactive produit dans l'étape b).

2. Procédé selon la revendication 1, dans lequel on met en contact le gaz de l'étape c) ayant une teneur réduite en $H_2S$ avec une quantité supplémentaire de solution réactive aqueuse contenant du chélate de Fe(III) solubilisé du ou desdit(s) acide(s), à une température inférieure au point de fusion du soufre et dans des conditions efficaces pour transformer le $H_2S$ en soufre, dans au moins une zone de contact additionnelle, et on produit un gaz ayant une teneur encore réduite en $H_2S$ et une solution ayant une teneur réduite en chélate de Fe(III) solubilisé dudit ou desdit(s) acide(s).

3. Procédé selon la revendication 2, dans lequel au moins une de la (des) zone(s) de contact additionnelle(s) comprend une zone de pulvérisation dans laquelle on fait passer à contre-courant le gaz ayant une teneur réduite en $H_2S$ à travers une pulvérisation de ladite solution de réactif additionnelle.

4. Procédé selon la revendication 3, dans lequel la solution ayant une teneur réduite en chélate ferrique du ou desdit(s) acide(s) et la solution ayant une teneur réduite en ledit(lesdits) acide-(s) provenant de ladite(desdites) zone(s) de contact additionnelle(s) sont régénérées dans une zone de régénération.

5. Procédé selon la revendication 1, dans lequel en outre

d) on enlève le soufre de la solution réactive de l'étape c),

e) on régénère la solution réactive dont on a enlevé le soufre, produisant une solution réactive ayant une concentration accrue en chélate de Fe(III) du ou des acide(s); et

f) on fait passer la solution régénérée de l'étape e) vers la première zone de contact aux fins d'utilisation en cet endroit comme solution réactive aqueuse.

6. Procédé selon la réaction 1, dans lequel en outre

d) on régénère la solution réactive de l'étape c), produisant une solution régénérée ayant une concentration accrue en chélate de Fe(III) du ou des acide(s);

e) on enlève le soufre de la solution régénérée de l'étape d); et

f) on fait passer la solution régénérée de l'étape e) vers la première zone de contact aux fins d'utilisation comme solutions réactives aqueuses.

7. Procédé selon l'une quelconque des revendications 1-6, dans lequel les chélates de fer employés sont des complexes de coordination dans lesquels le fer forme des chélates avec un acide organique de formule

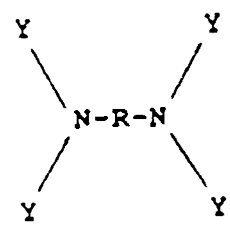

dans laquelle

- de deux à quatre des groupes Y sont choisis parmi les groupes acide acétique et propionique;

- de zéro à deux des groupes Y sont choisis parmi le 2-hydroxyéthyle, le 2-hydroxypropyle, et

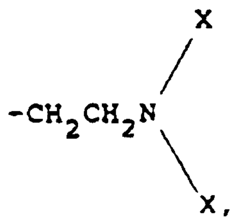

où X est choisi parmi les groupes acide acétique et propionique; et
R est un éthylène, propylène ou isopropylène ou encore un cyclohexane ou un benzène dans lequel les deux atomes d'hydrogène remplacés par un azote sont en position 1,2 , et leurs mélanges.

**8.** Procédé selon la revendication 7, dans lequel l'acide organique est l'acide N-(2-hydroxyéthyl)-éthylènediamine-triacétique.

**9.** Procédé selon l'une quelconque des revendications 1-6, dans lequel les chélates de fer employés sont des complexes de coordination avec l'acide nitrilotriacétique.

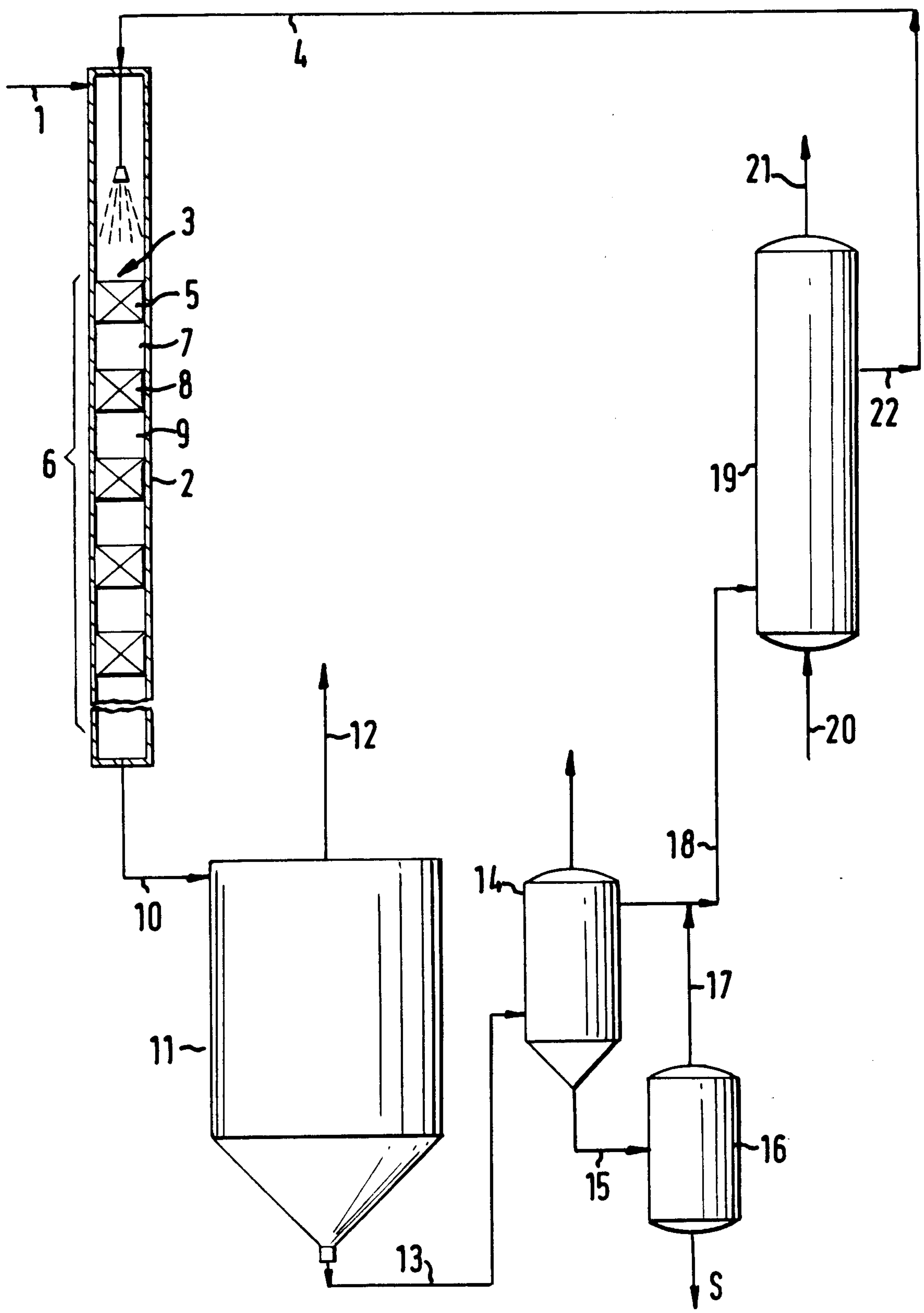
1
2
3
4
5
6
7
8
9
10
11
12
13
14
15
16
17
18
19
20
21
22
S